# EUROPEAN PATENT SPECIFICATION

(11) **EP 4 353 406 B1**
(45) Date of publication and mention of the grant of the patent: **21.01.2026**
(21) Application number: 22824623.7
(22) Date of filing: 29.03.2022
(51) Int. Cl.: B23Q 7/00, B23Q 3/00, B23Q 3/06

(54) **CLAMP DEVICE**
KLEMMVORRICHTUNG
DISPOSITIF DE SERRAGE

(30) Priority: 18.06.2021 JP 2021101700
(43) Date of publication of application: 17.04.2024
(73) Proprietor: PASCAL ENGINEERING CORPORATION, Itami-shi Hyogo 664-8502 (JP)
(72) Inventor: TAKAHASHI, Takuya, Itami-shi, Hyogo 664-8502 (JP)
(74) Representative: Prüfer & Partner mbB Patentanwälte · Rechtsanwälte
(86) International application number: PCT/JP2022/015564
(87) International publication number: WO 2022/264627

(56) References cited:
- CN-Y- 201 090 554
- CN-Y- 201 090 554
- JP-A- 2001 225 236
- JP-A- 2016 000 449
- JP-A- 2016 000 449
- JP-A- 2016 223 473
- JP-A- 2018 001 380
- JP-A- 2018 003 958
- JP-A- 2018 003 958
- JP-A- H11 333 649
- JP-U- S62 117 305
- JP-U- S62 117 305

## Description

### TECHNICAL FIELD

The present technology relates to a clamping device.

### BACKGROUND ART

There has been conventionally known a clamping device that fixes a movable member such as a work pallet with the movable member being aligned with a reference member such as a table of a machining center (for example, PTL 1 to PTL 3) described below). PTL4 discloses a clamping device according to the preamble of claim 1.

### CITATION LIST

### PATENT LITERATURE

PTL 1: WO 2011/046039
PTL 2: Japanese Patent Laying-Open No. 11-333649
PTL 3: Japanese Utility Model Registration No. 3219695
PTL4: JP 2016 000449 A

### SUMMARY OF INVENTION

### TECHNICAL PROBLEM

The clamping device is required to exhibit a stable clamping force. On the other hand, the clamping device is also required to have a reduced size.

It is an object of the present technology to provide a clamping device having a reduced size while exhibiting a stable clamping force.

### SOLUTION TO PROBLEM

A clamping device according to the present technology is a clamping device that is able to fix a fixation-target object to a base body and to position the fixation-target object with respect to the base body, the clamping device including: a fluid pressure cylinder fixed to the base body; and an annular member attachable to the fixation-target object. The fluid pressure cylinder includes: a cylinder main body; a first piston and a second piston each reciprocally movable with respect to the cylinder main body; a first cylinder chamber that drives each of the first piston and the second piston to a fixation side; a second cylinder chamber that drives the first piston and the second piston to a fixation-release side; and an engagement portion that is able to be located on an inner peripheral side of the annular member and that is able to switch between a first state and a second state in response to a reciprocal movement of each of the first piston and the second piston, the first state being a state in which the annular member is not pressed, the second state being a state in which the annular member is pressed to the base body side. The first piston, the first cylinder chamber, the second cylinder chamber, and the second piston are provided to be arranged side by side along a first direction from the base body side toward the fixation-target object side in an order of the first piston, the first cylinder chamber, the second cylinder chamber, and the second piston.

### ADVANTAGEOUS EFFECTS OF INVENTION

According to the present technology, the clamping device can have a reduced size while exhibiting a stable clamping force.

### BRIEF DESCRIPTION OF DRAWINGS

Fig. 1 is a longitudinal cross sectional view showing a first state (unclamping state) of a clamping device according to one embodiment.
Fig. 2 is a longitudinal cross sectional view showing a second state (clamping state) of the clamping device according to the embodiment.
Fig. 3 is a longitudinal cross sectional view of the clamping device shown in Figs. 1 and 2 in a different direction.
Fig. 4 is an enlarged view of a portion IV in Fig. 3.
Fig. 5 is a top cross sectional view of the clamping device shown in Figs. 1 to 4.
Fig. 6 is an enlarged longitudinal cross sectional view showing a structure around a clamping chamber and an unclamping chamber of the clamping device shown in Figs. 1 to 5.
Fig. 7 is a longitudinal cross sectional view showing a clamping device according to a first modification.
Fig. 8 is a longitudinal cross sectional view showing a clamping device according to a second modification.
Fig. 9 is a longitudinal cross sectional view showing a clamping device according to a third modification.

### DESCRIPTION OF EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

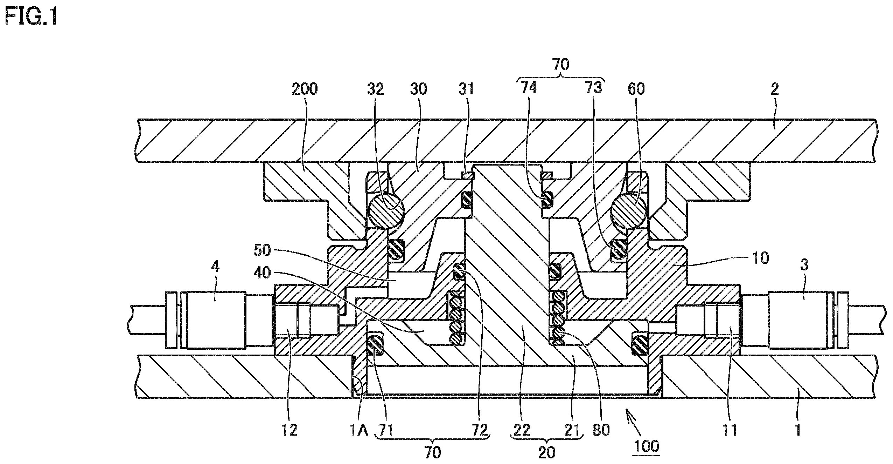

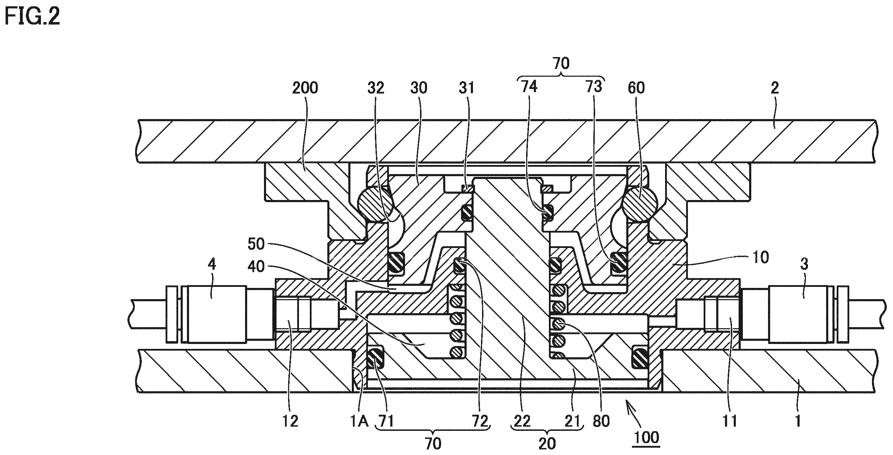

Each of Figs. 1 and 2 is a longitudinal cross sectional view showing a clamping device according to the present embodiment. Fig. 1 shows an unclamping state (first state), and Fig. 2 shows a clamping state (second state).

The clamping device according to the present embodiment can fix a movable member 2 (fixation-target object) to a reference member 1 (base body) and can position movable member 2 with respect to reference member 1 (in leftward/rightward direction, upward/downward direction, and depth direction in the plane of sheet in each of Figs. 1 and 2).

Reference member 1 is, for example, a table of a machining center or the like. Movable member 2 is, for example, a work pallet fixed to the table or the like.

A clamping cylinder 100 can be fixed to reference member 1. A ring member 200 (annular member) can be fixed to movable member 2. Ring member 200 is fixed to movable member 2 by, for example, a bolt or the like. The bolt for fixing ring member 200 may be inserted from the upper side in the figure or may be inserted from the lower side in the figure.

Clamping cylinder 100 includes a cylinder main body 10, a first piston member 20, a second piston member 30, a clamping chamber 40 (first cylinder chamber), an unclamping chamber 50 (second cylinder chamber), steel balls 60 (engagement portion/engagement balls), sealing members 70, and a biasing member 80.

A bottom portion of cylinder main body 10 is fitted into a hole portion 1A of reference member 1. By precisely adjusting the position and diameter of hole portion 1A, cylinder main body 10 can be aligned. Cylinder main body 10 has ports 11, 12. Port 11 is connectable to a clamping air tube 3. Port 12 is connectable to an unclamping air tube 4.

First piston member 20 includes a piston portion 21 and a rod portion 22. Second piston member 30 is fixed to the tip side of rod portion 22 of first piston member 20 by a stopper 31. Therefore, first piston member 20 and second piston member 30 are collectively reciprocally movable with respect to cylinder main body 10. A recess 32 is formed in an outer periphery of second piston member 30.

A working fluid for clamping is supplied to clamping chamber 40 through port 11. Thus, first piston member 20 and second piston member 30 are driven to the fixation side (lower side in the figure). The working fluid supplied to clamping chamber 40 can be discharged through port 11. Air is used as the working fluid for clamping, for example; however, the working fluid is not limited to air. Hydraulic pressure may be used instead of air pressure.

A working fluid for unclamping is supplied to unclamping chamber 50 through port 12. Thus, first piston member 20 and second piston member 30 are driven to the fixation-release side (upper side in the figure). The working fluid supplied to unclamping chamber 50 can be discharged through port 12. Air is used as the working fluid for unclamping, for example; however, the working fluid is not limited to air. Hydraulic pressure may be used instead of air pressure.

Each of steel balls 60 is held by cylinder main body 10 and is located on the inner peripheral side of ring member 200. The plurality of steel balls 60 are provided to be arranged side by side in a peripheral direction of ring member 200. Each of steel balls 60 is held by cylinder main body 10. Further, each of steel balls 60 is received in recess 32 of second piston member 30.

In the unclamping state (first state) shown in Fig. 1, steel ball 60 does not protrude outward in a radial direction of cylinder main body 10, and does not press ring member 200. In this state, movable member 2 can be detached for the purpose of replacement. In the clamping state (second state) shown in Fig. 2, the steel ball protrudes outward in the radial direction of cylinder main body 10, and presses ring member 200 toward reference member 1 (obliquely downward in the figure).

Sealing members 70 include: a sealing member 71 provided on an outer periphery of piston portion 21 of first piston member 20; a sealing member 72 provided between rod portion 22 of first piston member 20 and cylinder main body 10; a sealing member 73 provided on an outer periphery of second piston member 30; and a sealing member 74 provided between rod portion 22 of first piston member 20 and second piston member 30.

Sealing member 71 seals between clamping chamber 40 and outside of cylinder main body 10. Sealing member 72 seals between clamping chamber 40 and unclamping chamber 50. Each of sealing members 73, 74 seals between unclamping chamber 50 and outside of cylinder main body 10.

Biasing member 80 is provided in clamping chamber 40. Biasing member 80 illustrated in Figs. 1 and 2 is a coil spring provided around rod portion 22. Biasing member 80 biases piston portion 21 of first piston member 20 and cylinder main body 10 in a direction away from each other. This makes it possible to secure a clamping force to fix movable member 2 by the biasing force of biasing member 80 even when supply of the working fluid pressure for clamping into clamping chamber 40 is inhibited for some reason.

Thus, in clamping cylinder 100, first piston member 20, clamping chamber 40, unclamping chamber 50, and second piston member 30 are provided to be arranged side by side along the upward/downward direction (first direction) from the reference member 1 side toward the movable member 2 side in the order of piston portion 21 of first piston member 20, clamping chamber 40, unclamping chamber 50, and second piston member 30. In response to a reciprocal movement of second piston member 30, steel balls 60 are moved in the radial direction (second direction) to switch between the unclamping state and the clamping state.

It should be noted that in the present specification, for example, even when unclamping chamber 50 is formed above and below piston portion 21 of first piston member 20, it is interpreted that first piston member 20, clamping chamber 40, unclamping chamber 50, and second piston member 30 are arranged side by side in the order of piston portion 21 of first piston member 20, clamping chamber 40, unclamping chamber 50, and second piston member 30 when at least part of unclamping chamber 50 is formed between clamping chamber 40 and second piston member 30.

When a plurality of clamping cylinders 100 and a plurality of ring members 200 are installed on reference member 1 and movable member 2, the plurality of clamping cylinders 100 are first fixed to the reference member 1 side. Next, each of ring members 200 is clamped by a corresponding one of clamping cylinders 100. Here, each of clamping cylinders 100 is positioned in the horizontal direction with respect to reference member 1. Therefore, each of the plurality of ring members 200 is also positioned in the horizontal direction with respect to reference member 1. Further, movable member 2 is fixed (by a bolt) to the plurality of ring members 200. By using the plurality of clamping cylinders 100 and the plurality of ring members 200 in this way, movable member 2 can be positioned and fixed to reference member 1 with a high clamping force.

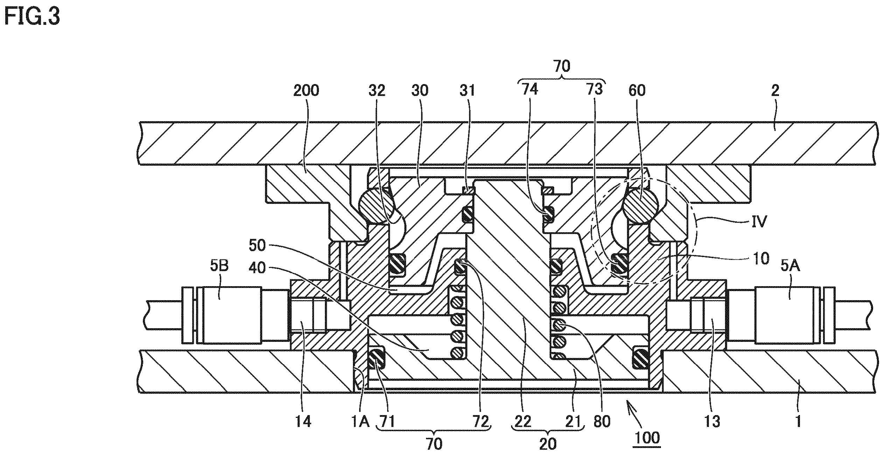

Fig. 3 is a longitudinal cross sectional view of clamping cylinder 100 along a direction different from that in each of Figs. 1 and 2. In the cross sectional direction shown in Fig. 3, cylinder main body 10 has ports 13, 14. Ports 13, 14 are connected to detection air tubes 5A, 5B.

Cylinder main body 10 has a detection port 16 that communicates with ports 13, 14. In the clamping state, ring member 200 closes detection port 16. Thus, air pressure in each of detection air tubes 5A, 5B is increased. Therefore, by measuring the air pressure in each of detection air tubes 5A, 5B, it is possible to detect whether or not a normal clamping operation is performed.

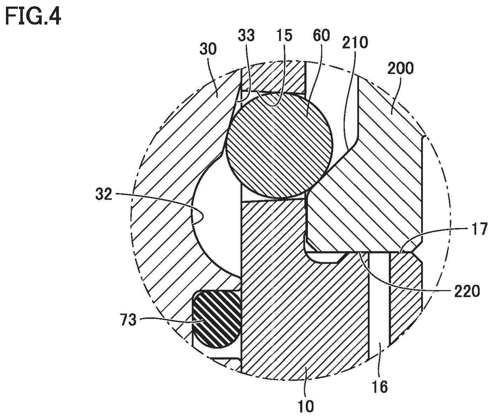

Fig. 4 is an enlarged view of a portion IV in Fig. 3. As shown in Fig. 4, steel ball 60 is held by a holding portion 15 of cylinder main body 10. Further, an inclined surface 33 is provided on the upper side (the movable member 2 side) with respect to recess 32 of second piston member 30.

During the clamping operation, second piston member 30 is driven to the lower side in the figure, with the result that steel ball 60 is pressed by inclined surface 33 to press an inclined surface 210 of ring member 200 obliquely downward. Thus, ring member 200 is attracted to the lower side in the figure.

Cylinder main body 10 has a reference surface 17. Detection port 16 opens in reference surface 17.

During the unclamping operation, second piston member 30 driven to the upper side in the figure pushes up movable member 2. In a state in which movable member 2 is not clamped, the terminal end of the detection port is open in reference surface 17, air supplied from each of detection air tubes 5A, 5B is leaked.

The inner peripheral surface of ring member 200 is brought into abutment with the outer peripheral surface of cylinder main body 10 to attain positioning in the horizontal direction. Further, when ring member 200 is attracted to the lower side during the clamping operation, an abutment surface 220 of ring member 200 is brought into abutment with reference surface 17 of cylinder main body 10, thereby attaining positioning in the height direction. Thus, detection port 16 is closed to avoid leakage of the air supplied from each of detection air tubes 5A, 5B. By measuring the air pressure in each of detection air tubes 5A, 5B using a pressure sensor, it is possible to check whether or not movable member 2 is normally clamped. Inclination of movable member 2 can be also detected by providing a plurality of detection ports.

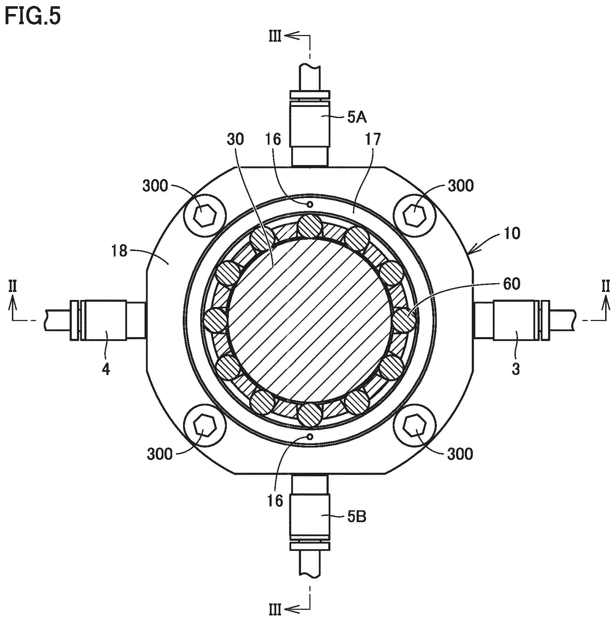

Fig. 5 is a top cross sectional view of clamping cylinder 100. A cross section along II-II in Fig. 5 corresponds to Fig. 2, and a cross section along III-III in Fig. 5 corresponds to Fig. 3.

As shown in Fig. 5, clamping air tube 3, unclamping air tube 4, and detection air tubes 5A, 5B are connected to cylinder main body 10 in directions displaced from one another by 90° in the peripheral direction. Cylinder main body 10 has a flange portion 18 protruding in a direction away from a central axis of cylinder main body 10. Clamping air tube 3, unclamping air tube 4, and detection air tubes 5A, 5B are connected to flange portion 18. Cylinder main body 10 is fixed to reference member 1 by fixing members 300 inserted in flange portion 18. Since both clamping chamber 40 and unclamping chamber 50 are provided on the upper side (the movable member 2 side) with respect to piston portion 21 in clamping cylinder 100, both ports connecting clamping air tube 3 and unclamping air tube 4 can be provided in flange portion 18. Further, since the cylinder chamber can be avoided from being provided below piston portion 21, reference member 1 can be formed as a relatively thin plate-shaped member. As a result of these, clamping cylinder 100 can be reduced in size particularly in the height direction (depth direction in the plane of sheet in Fig. 5).

Further, as shown in Fig. 5, since steel balls 60 are arranged on the outer periphery of second piston member 30 that defines unclamping chamber 50, the number of steel balls 60 arranged in the peripheral direction can be increased as compared with a case where steel balls 60 are disposed on the outer periphery of rod portion 22 of first piston member 20 (i.e., a case where second piston member 30 is not provided). As a result, ring member 200 can be positioned by clamping cylinder 100 more precisely. Further, surface pressure acting on each of steel balls 60 can be reduced, thereby reducing the size of steel ball 60. As a result, clamping cylinder 100 can be reduced in size particularly in the height direction (depth direction in the plane of sheet in Fig. 5).

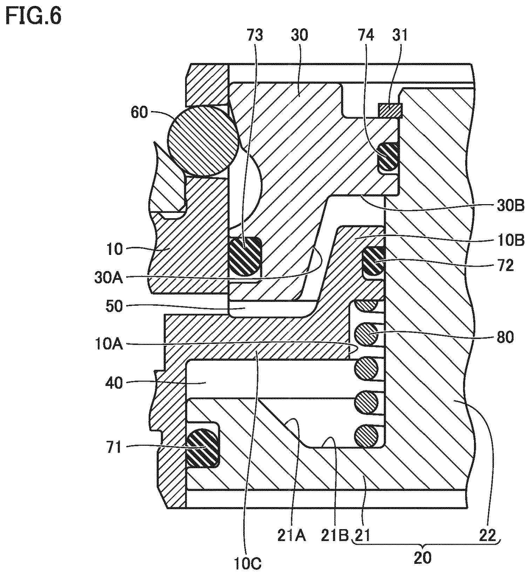

Fig. 6 is an enlarged longitudinal cross sectional view showing a structure around clamping chamber 40 and unclamping chamber 50 of the clamping device shown in Figs. 1 to 5.

As shown in Fig. 6, cylinder main body 10 includes a partition wall portion 10C that partitions clamping chamber 40 and unclamping chamber 50. Biasing member 80 is provided between piston portion 21 of first piston member 20 and partition wall portion 10C.

Piston portion 21 of first piston member 20 is provided with a recess (first recess) recessed in a direction away from partition wall portion 10C. This recess is constituted of a tapered side surface 21A and a bottom surface 21B.

Partition wall portion 10C is provided with a recess 10A (second recess) recessed in a direction away from piston portion 21 of first piston member 20. Biasing member 80 is provided to be accommodated in the recess formed in piston portion 21 and recess 10A formed in partition wall portion 10C.

Partition wall portion 10C includes a protrusion 10B protruding in a direction toward second piston member 30. Second piston member 30 is provided with a recess (third recess) recessed to receive protrusion 10B. This recess is constituted of a tapered side surface 30A and a bottom surface 30B.

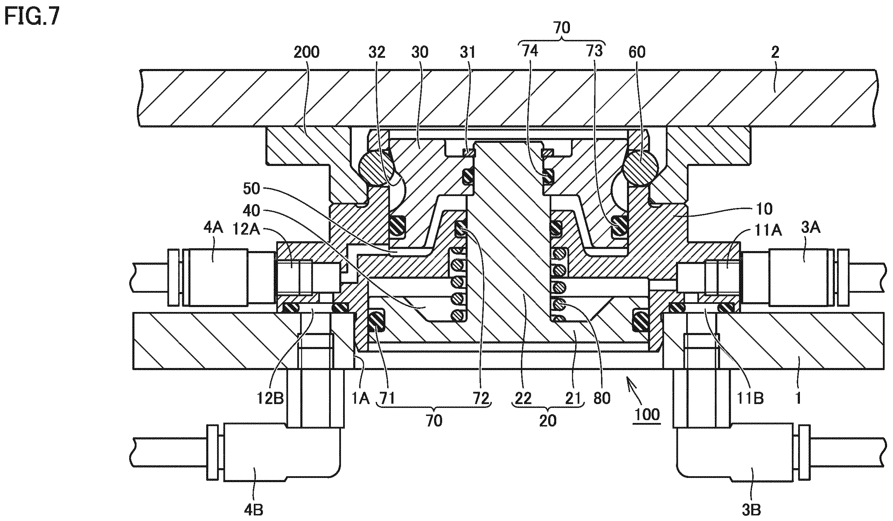

Next, Figs. 7 to 9 are longitudinal cross sectional views showing clamping cylinders 100 according to modifications. The modifications of clamping cylinder 100 will be described with reference to Figs. 7 to 9.

In the modification shown in Fig. 7, clamping air tubes 3A, 3B and unclamping air tubes 4A, 4B can be connected to cylinder main body 10 in two directions (from above and below reference member 1). Cylinder main body 10 is provided with: ports 11A, 12A for connections of clamping air tube 3A and unclamping air tube 4A; and ports 11B, 12B for connections of clamping air tube 3B and unclamping air tube 4B. One of clamping air tubes 3A, 3B can be selectively used. One of unclamping air tubes 4A, 4B can be selectively used.

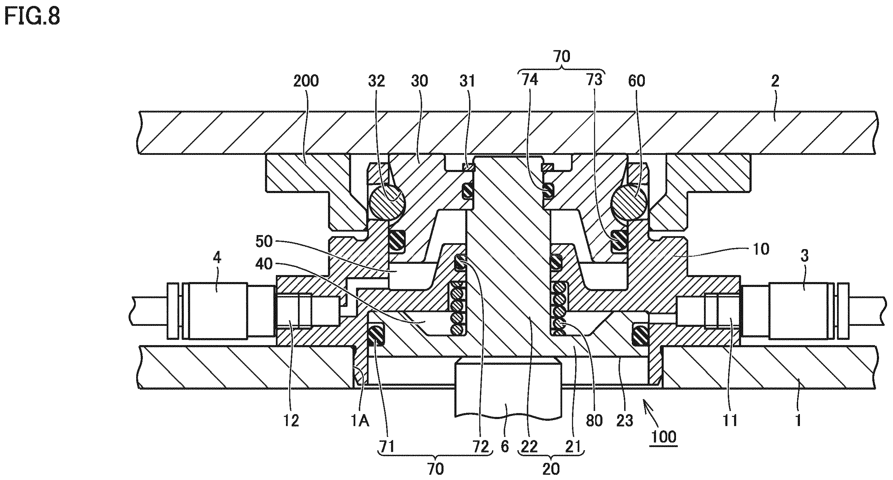

In the modification shown in Fig. 8, when a certain fault occurs in the unclamping operation, a jig 6 is used to push a rear surface 23 of first piston member 20 upward so as to complete the unclamping operation. In clamping cylinder 100 according to the present embodiment, since unclamping chamber 50 is formed above piston portion 21, rear surface 23 of first piston member 20 can be exposed to the outside, with the result that the operation using jig 6 can be performed.

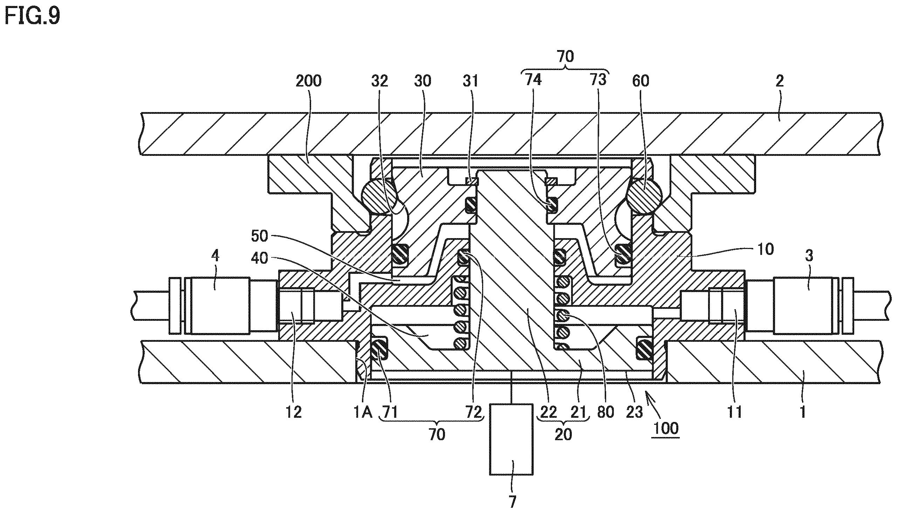

In the modification shown in Fig. 9, the position of first piston member 20 is checked using a sensor 7 to check a clamping state. In clamping cylinder 100 according to the present embodiment, since unclamping chamber 50 is formed above piston portion 21, rear surface 23 of first piston member 20 can be exposed to the outside, with the result that the measurement using sensor 7 can be performed.

Although the embodiments of the present technology have been described and illustrated in detail, it is clearly understood that the same is by way of illustration and example only and is not to be taken by way of limitation. The scope of the present technology is defined by the terms of the claims.

### REFERENCE SIGNS LIST

1: reference member (table); 1A: hole portion; 2: movable member (palette); 3, 3A, 3B: clamping air tube; 4, 4A, 4B: unclamping air tube; 5A, 5B: detection air tube; 6: jig; 7: sensor; 10: cylinder main body; 10A: recess; 10B: protrusion; 10C: partition wall portion; 11, 11A, 11B, 12, 12A, 12B, 13, 14: port; 15: holding portion; 16: detection port; 17: reference surface; 18: flange portion; 20: first piston member; 21: piston portion; 21A: tapered side surface; 21B: bottom surface; 22: rod portion; 23: rear surface; 30: second piston member; 31: stopper; 32: recess; 33: inclined surface; 40: clamping chamber; 50: unclamping chamber; 60: steel ball (engagement tool); 70 to 74: sealing member; 80: biasing member; 100: clamping cylinder; 200: ring member; 210: inclined surface; 220: abutment surface; 300: fixing member (bolt).

## Claims

1. A clamping device that is able to fix a fixation-target object (2) to a base body (1) and to position the fixation-target object (2) with respect to the base body (1), the clamping device comprising:
a fluid pressure cylinder (100) fixed to the base body (1); and
an annular member (200) attachable to the fixation-target object (2), wherein
the fluid pressure cylinder (100) includes
a cylinder main body (10),
a first piston (21) and a second piston (30) each reciprocally movable with respect to the cylinder main body (10),
and **characterized by**
a first cylinder chamber (40) that drives each of the first piston (21) and the second piston (30) to a fixation side,
a second cylinder chamber (50) that drives each of the first piston (21) and the second piston (30) to a fixation-release side, and
an engagement portion (60) that is able to be located on an inner peripheral side of the annular member (200) and that is able to switch between a first state and a second state in response to a reciprocal movement of each of the first piston (21) and the second piston (30), the first state being a state in which the annular member (200) is not pressed, the second state being a state in which the annular member (200) is pressed to the base body (1) side, and
the first piston (21), the first cylinder chamber (40), the second cylinder chamber (50), and the second piston (30) are provided to be arranged side by side along a first direction from the base body (1) side toward the fixation-target object (2) side in an order of the first piston (21), the first cylinder chamber (40), the second cylinder chamber (50), and the second piston (30).

2. The clamping device according to claim 1, wherein the first piston (21) is connected to the second piston (30) via a rod portion (22) extending along the first direction.

3. The clamping device according to claim 1 or 2, wherein
the engagement portion (60) includes a plurality of engagement balls (60) held by the cylinder main body (10) to be arranged side by side in a peripheral direction of the annular member (200), and
the second piston (30) is provided with a recess (32) in which at least a portion of each of the plurality of engagement balls (60) is able to be accommodated.

4. The clamping device according to any one of claims 1 to 3, wherein in response to a movement of the second piston (30), the engagement portion (60) is moved in a second direction orthogonal to the first direction.

5. The clamping device according to any one of claims 1 to 4, wherein the cylinder main body (10) includes a partition wall portion (10C) that partitions the first cylinder chamber (40) and the second cylinder chamber (50).

6. The clamping device according to claim 5, further comprising a biasing member (80) provided between the first piston (21) and the partition wall portion (10C) so as to bias the first piston (21) toward the fixation side.

7. The clamping device according to claim 6, wherein
the first piston (21) is provided with a first recess (21A, 21B) recessed in a direction away from the partition wall portion (10C),
the partition wall portion (10C) is provided with a second recess (10A) recessed in a direction away from the first piston (21), and
the biasing member (80) is provided to be accommodated in each of the first recess (21A, 21B) and the second recess (10A).

8. The clamping device according to claim 7, wherein
the partition wall portion (10C) includes a protrusion (10B) protruding in a direction toward the second piston(30), and
the second piston (30) is provided with a third recess (30A, 30B) recessed to receive the protrusion (10B).

9. The clamping device according to any one of claims 1 to 8, wherein the cylinder main body (10) includes a flange portion (18) protruding in a direction away from a central axis of the cylinder main body (10), and the flange portion (18) is provided with a working fluid supplying/discharging port (13, 14) for each of the first cylinder chamber (40) and the second cylinder chamber (50).

## Patentansprüche

1. Eine Klemmvorrichtung, die ein Fixierungszielobjekt (2) an einem Grundkörper (1) fixieren und das Fixierungszielobjekt (2) in Bezug auf den Grundkörper (1) positionieren kann, wobei die Klemmvorrichtung umfasst:
einen Fluiddruckzylinder (100), der an dem Grundkörper (1) fixiert ist; und
ein ringförmiges Element (200), das an dem Fixierungszielobjekt (2) anfügbar ist, wobei
der Fluiddruckzylinder (100) aufweist
einen zylindrischen Hauptkörper (10),
einen ersten Kolben (21) und einen zweiten Kolben (30), die jeweils in Bezug auf den zylindrischen Hauptkörper (10) wechselseitig bewegbar sind,
eine erste Zylinderkammer (40), die jeweils den ersten Kolben (21) und den zweiten Kolben (30) zu einer Fixierungsseite treibt,
eine zweite Zylinderkammer (50), die jeweils den ersten Kolben (21) und den zweiten Kolben (30) zu einer Fixierungsfreigabeseite treibt, und
einen Eingriffsabschnitt (60), der an einer Innenumfangsseite des ringförmigen Elements (200) angeordnet sein kann, und der zwischen einem ersten Zustand und einem zweiten Zustand als Antwort auf eine wechselseitige Bewegung jeweils des ersten Kolbens (21) und des zweiten Kolbens (30) umschalten kann, wobei der erste Zustand ein Zustand ist, in dem das ringförmige Element (200) nicht gedrückt ist, wobei der zweite Zustand ein Zustand ist, in dem das ringförmige Element (200) zu der Seite des Grundkörpers (1) gedrückt ist, und
der erste Kolben (21), die erste Zylinderkammer (40), die zweite Zylinderkammer (50) und der zweite Kolben (30) vorgesehen sind, um Seite an Seite entlang einer ersten Richtung von der Seite des Grundkörpers (1) zu der Seite des Fixierungszielobjekts (2) in einer Reihenfolge des ersten Kolbens (21), der ersten Zylinderkammer (40), der zweiten Zylinderkammer (50) und des zweiten Kolbens (30) angeordnet zu sein.

2. Die Klemmvorrichtung gemäß Anspruch 1, wobei der erste Kolben (21) mit dem zweiten Kolben (30) über einen sich entlang der ersten Richtung erstreckenden Stangenabschnitt (22) verbunden ist.

3. Die Klemmvorrichtung gemäß Anspruch 1 oder 2, wobei
der Eingriffsabschnitt (60) eine Vielzahl von Eingriffskugeln (60) enthält, die durch den Zylinderhauptkörper (10) gehalten sind, um Seite an Seite in einer peripheren Richtung des ringförmigen Elements (200) angeordnet zu sein, und
der zweite Kolben (30) mit einer Aussparung (32) versehen ist, in der mindestens ein Abschnitt jeder der Vielzahl von Eingriffskugeln (60) untergebracht sein kann.

4. Die Klemmvorrichtung gemäß einem der Ansprüche 1 bis 3, wobei als Antwort auf eine Bewegung des zweiten Kolbens (30) der Eingriffsabschnitt (60) in einer zweiten Richtung orthogonal zu der ersten Richtung bewegt wird.

5. Die Klemmvorrichtung gemäß einem der Ansprüche 1 bis 4, wobei der zylindrische Hauptkörper (10) einen Trennwandabschnitt (10C) enthält, der die erste Zylinderkammer (40) und die zweite Zylinderkammer (50) trennt.

6. Die Klemmvorrichtung gemäß Anspruch 5, ferner umfassend ein zwischen dem ersten Kolben (21) und dem Trennwandabschnitt (10C) vorgesehenes Vorspannelement (80), um den ersten Kolben (21) zu der Fixierungsseite hin vorzuspannen.

7. Die Klemmvorrichtung gemäß Anspruch 6, wobei
der erste Kolben (21) mit einer ersten Aussparung (21A, 21B) versehen ist, die in einer Richtung weg von dem Trennwandabschnitt (10C) ausgespart ist,
der Trennwandabschnitt (10C) mit einer zweiten Aussparung (10A) versehen ist, die in einer Richtung weg von dem ersten Kolben (21) ausgespart ist, und
das Vorspannelement (80) vorgesehen ist, um in jeder der ersten Aussparung (21A, 21B) und der zweiten Aussparung (10A) untergrbracht zu sein.

8. Die Klemmvorrichtung gemäß Anspruch 7, wobei
der Trennwandabschnitt (10C) einen Vorsprung (10B) enthält, der in einer Richtung zu dem zweiten Kolben (30) vorsteht, und
der zweite Kolben (30) mit einer dritten Aussparung (30A, 30B) versehen ist, die ausgespart ist, um den Vorsprung (10B) aufzunehmen.

9. Die Klemmvorrichtung gemäß einem der Ansprüche 1 bis 8, wobei der zylindrische Hauptkörper (10) einen Flanschabschnitt (18) enthält, der in einer Richtung weg von einer Mittelachse des Zylinderhauptkörpers (10) vorsteht, und der Flanschabschnitt (18) mit einer Arbeitsfluidzulauf/-ablassöffnung (13, 14) für jede der ersten Zylinderkammer (40) und der zweiten Zylinderkammer (50) versehen ist.

## Revendications

1. Dispositif de serrage qui est capable de fixer un objet cible de fixation (2) à un corps de base (1) et de positionner l'objet cible de fixation (2) par rapport au corps de base (1), le dispositif de serrage comprenant :
un cylindre de pression de fluide (100) fixé au corps de base (1) ; et
un élément annulaire (200) étant attachable à l'objet cible de fixation (2), où
le cylindre de pression de fluide (100) comprend
un corps principal de cylindre (10),
un premier piston (21) et un second piston (30) chacun déplaçable en va-et-vient par rapport au corps principal de cylindre (10),
et **caractérisé par**
une première chambre de cylindre (40) qui entraîne chacun du premier piston (21) et du second piston (30) vers un côté de fixation,
une seconde chambre de cylindre (50) qui entraîne chacun du premier piston (21) et du second piston (30) vers un côté de libération de fixation, et
une portion d'engagement (60) qui est capable d'être située sur un côté périphérique interne de l'élément annulaire (200) et qui est capable de commuter entre un premier état et un second état en réponse à un mouvement de va-et-vient de chacun du premier piston (21) et du second piston (30), le premier état étant un état dans lequel l'élément annulaire (200) n'est pas pressé, le second état étant un état dans lequel l'élément annulaire (200) est pressé vers le côté de corps de base (1), et
le premier piston (21), la première chambre de cylindre (40), la seconde chambre de cylindre (50), et le second piston (30) sont fournis pour être agencés côte à côte le long d'une première direction depuis le côté de corps de base (1) vers le côté d'objet cible de fixation (2) dans un ordre du premier piston (21), de la première chambre de cylindre (40), de la seconde chambre de cylindre (50), et du second piston (30).

2. Dispositif de serrage selon la revendication 1, où le premier piston (21) est connecté au second piston (30) via une portion de tige (22) s'étendant le long de la première direction.

3. Dispositif de serrage selon la revendication 1 ou 2, où
la portion d'engagement (60) comprend une pluralité de billes d'engagement (60) maintenues par le corps principal de cylindre (10) pour être agencées côte à côte dans une direction périphérique de l'élément annulaire (200), et
le second piston (30) est pourvu d'un évidement (32) dans lequel au moins une portion de chacune de la pluralité de billes d'engagement (60) est capable d'être placée.

4. Dispositif de serrage selon l'une quelconque des revendications 1 à 3, où en réponse à un mouvement du second piston (30), la portion d'engagement (60) est déplacée dans une seconde direction orthogonale à la première direction.

5. Dispositif de serrage selon l'une quelconque des revendications 1 à 4, où le corps principal de cylindre (10) comprend une portion de paroi de séparation (10C) qui sépare la première chambre de cylindre (40) et la seconde chambre de cylindre (50).

6. Dispositif de serrage selon la revendication 5, comprenant en outre un élément de biais (80) prévu entre le premier piston (21) et la portion de paroi de séparation (10C) de manière à biaiser le premier piston (21) vers le côté de fixation.

7. Dispositif de serrage selon la revendication 6, où
le premier piston (21) est pourvu d'un premier évidement (21A, 21B) évidé dans une direction s'éloignant de la portion de paroi de séparation (10C),
la portion de paroi de séparation (10C) est pourvue d'un second évidement (10A) évidé dans une direction s'éloignant du premier piston (21), et
l'élément de biais (80) est prévu pour être placé dans chacun du premier évidement (21A, 21B) et du second évidement (10A).

8. Dispositif de serrage selon la revendication 7, où
la portion de paroi de séparation (10C) comprend une saillie (10B) faisant saillie dans une direction vers le second piston (30), et
le second piston (30) est pourvu d'un troisième évidement (30A, 30B) évidé pour recevoir la saillie (10B).

9. Dispositif de serrage selon l'une quelconque des revendications 1 à 8, où le corps principal de cylindre (10) comprend une portion de bride (18) faisant saillie dans une direction s'éloignant d'un axe central du corps principal de cylindre (10), et la portion de bride (18) est pourvue d'un orifice d'alimentation/évacuation de fluide de travail (13, 14) pour chacune de la première chambre de cylindre (40) et de la seconde chambre de cylindre (50).
